**Europäisches Patentamt**

**European Patent Office**

**Office européen des brevets**

(11) Publication number: **0 072 250**
**B1**

# EUROPEAN PATENT SPECIFICATION

(45) Date of publication of patent specification: **24.04.85**

(51) Int. Cl.⁴: **A 23 L 1/216**

(21) Application number: **82304219.7**

(22) Date of filing: **10.08.82**

(54) **Potato products.**

(30) Priority: **10.08.81 GB 8124362**

(43) Date of publication of application:
**16.02.83 Bulletin 83/07**

(45) Publication of the grant of the patent:
**24.04.85 Bulletin 85/17**

(84) Designated Contracting States:
**AT BE CH DE FR IT LI LU NL SE**

(56) References cited:
**DE-A-1 492 630**
**FR-A-1 538 975**
**GB-A-2 050 143**
**US-A-2 498 024**
**US-A-4 097 612**
**US-A-4 183 963**

(73) Proprietor: **Mars U.K. Limited**
**143-149 Fenchurch Street**
**London EC3M 6BN (GB)**

(72) Inventor: **Atherton, John**
**Westfield House School Road**
**Middleton King's Lynn Norfolk (GB)**
Inventor: **Hawkins, Michael John**
**21 Higham Green Fairstead Estate**
**King's Lynn Norfolk (GB)**
Inventor: **Smith, Philip Grahame**
**Hatherley Fir Tree Drive**
**West Winch King's Lynn Norfolk (GB)**

(74) Representative: **Jones, Alan John et al**
**CARPMAELS & RANSFORD 43 Bloomsbury**
**Square**
**London, WC1A 2RA (GB)**

The file contains technical information
submitted after the application was filed and
not included in this specification

Courier Press, Leamington Spa, England.

## Description

This invention relates to potato products and especially to packaged pre-cooked potato pieces for frying.

Potato pieces for frying are available in various forms, for example in the form of frozen chips for deep frying and oven chips. As both these products are frozen products they require, of course, to be stored in a freezer.

In order to obviate this disadvantage and to produce a product that can be stored at room temperature, it has been proposed to package pre-cooked potato pieces in pouches in a sterile environment.

One such process is disclosed in GB—A—2 050 143 (Dai Nippon). In this process the potato pieces are partially pre-dried before they are packaged. In the preferred form of the process, the potato pieces are pre-dried by part-frying, which introduces oil into the product.

In the Dai Nippon process the partial pre-drying step is carried out to prevent accumulations of water in the package, which would lead to the production of a soggy product and excessive and violent spattering of oil in the final cooking step of frying in deep oil. The partial pre-drying step is also said to promote the browning of the surface of the potato product during frying in deep oil.

However, even with this partial pre-drying step, the Dai Nippon products require long cooking times and are frequently considerably overcooked before they are adequately browned on the surface.

US—A—2 498 024 (Baxter) relates to a process for controlling the colour of cooked fried potatoes by use of a surface treatment of the raw potato with a sugar solution. However, the raw potato is not pre-dried at all and no mention is made of a reduction in the cooking time of the raw potato.

US—A—4 097 612 (Powrie) is directed to the problem of reducing the greying of potato tissue during thermal sterilization and storage in a pouch, and discloses a three stage dipping process to solve this problem. The Powrie patent also mentions treatment with a reducing sugar to promote browning. However, the Powrie patent does not mention any drying of the potato product, nor does it mention any reduction in cooking time of the potato product.

This invention is based on the observation that if potato pieces for frying are surface treated with a mixture of flavouring or flavour-enhancing salt and at least one reducing sugar or a di- or poly-saccharide which breaks down on heating to form a reducing sugar and are partially pre-dried to a critical level before being sealed in the package and subjected to cooking and sterilization, the product on frying achieves a crisp, browned outer surface with a far shorter frying time than is required for other products of similar nature. It also has an improved flavour after frying.

This invention therefore provides a dry, cooked, heat sterilized, packaged potato product for frying comprising potato pieces which have been surface dried to reduce their moisture content by from 2 to 10% on a w/w basis so that the potato pieces have a moisture content of from 72 to 80% by weight, the potato pieces having been surface treated prior to packaging with a combination of a flavouring or flavour-enhancing salt and at least one reducing sugar or a di- or poly-saccharide which breaks down on heating to form a reducing sugar.

The invention also provides a method of making a dry, cooked, heat sterilized, packaged potato product, which comprises surface treating potato pieces with a flavouring or flavour enhancing salt and at least one reducing sugar or a di- or poly-saccharide which breaks down on heating to form a reducing sugar and surface drying the potato pieces by reducing their moisture content by from 2 to 10% on a w/w basis to produce potato pieces having a moisture content of from 72 to 80% by weight, and thereafter placing the treated, partially dried potato pieces in a package in which they are sealed, sterilized and cooked.

As reducing sugars which can be used in the operation of the invention there may be mentioned, for example, monosaccharides such as D- and L- glucose, fructose and lactose. The di- and poly-saccharides should break down to form reducing sugars during sterilizing and/or cooking of the product or during the initial stages of the frying operation. Sucrose may be mentioned as an example of such a di-saccharide.

The sugar controls browning of the product during frying but also has an effect on the flavour of the product, especially its sweetness. Sucrose for example provides relatively low rates of browning of the product but significantly changes the sweetness of the product. On the other hand dextrose, fructose and the like give lower changes of sweetness but produce very much higher rates of browning while lactose produces virtually no increase in sweetness but has very good browning properties.

By using mixtures of two or more of the sugars, for example mixtures of sucrose and lactose or glucose and lactose, a ready control of the flavour and browning properties of the product can be achieved so that even with changes of the type of potato or of changes in flavour within a given type of potato throughout the year it is possible to achieve a consistent product.

The salt which is added is primarily used as a flavouring agent and to this end normally a flavouring salt such as sodium chloride will be used. It is however possible to use other flavouring salts, such as potassium chloride, or a flavour enhancing salt, such as mono sodium glutamate, either instead of or together with a flavouring salt.

The treatment with the flavouring or flavour-enhancing salt and reducing sugar or di- or poly-saccharide is most conveniently carried out by dipping the potato pieces in a solution containing both the salt and the sugar(s) in the desired proportions. Alternatively, the potato pieces may be dipped sequentially into a solution containing the salt and a solution containing the sugar(s). It is however possible to spray the pieces with a solution of salt and sugar(s) or even to dust dry salt and sugar(s) onto the pieces.

The surface treatment normally result in the application to the surface of the potato pieces of the salt in an amount of from 0.1 to 0.4% and the sugar(s) in an amount of from 0.1 to 0.5% by weight, calculated on the weight of the pieces. This can be achieved, for example, by dipping the pieces in a solution containing 1 to 8% by weight of the salt and 0.5 to 4% by weight of the sugar(s). The pieces may be immersed in the solution for a period from 10 to 120 seconds, the longer immersion times being used at the lower concentrations of the salt and the sugar(s).

Before they are subjected to the drying treatment the pieces will normally be blanched to inhibit enzyme activity and to inhibit oxidation, greying and browning reactions. A typical blanching process comprises immersing the pieces in hot water containing acid sodium pyrophosphate as a greying inhibitor and sodium metabisulphite as a browning inhibitor. This blanching operation can also cause partial leaching of sugars from high sugar potatoes thus giving a more uniform colour formation during frying. The blanching solution may contain, for example, 0.5 to 1% by weight of acid sodium pyrophosphate and approximately 0.05% of sodium metabisulphite. While the blanching conditions are not critical, a typical blanching operation may be carried out by immersing the pieces in hot water at from 84 to 90°C for a period of from 5 to 10 minutes.

The amount of water removed from the product in the partial drying step is crucial to the quality of the product. If too much water is removed from the product, darkening of the product occurs and off flavours are introduced. If too little water is removed, the time required to brown the product becomes very much longer, there is a high weight loss on frying and the water which is removed on frying tends to degrade the oil or fat in which the product is fried.

The potato pieces are packaged in air tight packages in which they can be sealed either under vacuum or under an inert gas atmosphere at reduced pressure and in which they can be heated under conditions satisfactory to precook the potato pieces and also to sterilize the product.

The packages must be sealable and when sealed must be air and moisture tight. The packaging material comprise a metal, for example aluminium, foil laminated to heat sealable thermoplastics film or it may comprise an oxygen-barrier polymeric film such as polyvinyl dichloride or ethyl vinyl alcohol film laminated to heat sealable thermoplastics film. Preferably a thermoplastics film is laminated on each face of the barrier film whether it be a metal foil or a polymeric film.

Among the potato products which can be produced are potato chips (french fries), or roast potatoes, a product which has not previously been satisfactorily produced in packaged form. On cooking, by frying, the surface of the pieces browns very much more readily than is customarily the case with products of this sort and generally frying times of only about 2 to 5 minutes are required. The products therefore do not become grossly overcooked during frying and therefore have a very much better taste and texture than other products of this type.

The following Examples illustrate the invention.

Example 1

Potatoes having a moisture content of approximately 80% by weight were peeled and chipped and slivers and nubbins were removed. The potato chips were then subjected to a hot water blanch at 87°C+2°C for 7 minutes. The blanch water contained 0.5% by weight of acid sodium pyrophosphate and 0.05% of sodium metabisulphite. The blanched chips were then rinsed in water at 20°C to cool the chips and to remove surplus starch and the constituents of the blanching solution. The chips were then surface treated by dipping them into a solution at ambient temperature containing 4% sodium chloride and 1% sucrose for 40 seconds.

After draining the chips were dried to reduce their water content to approximately 75 to 77% w/w using a hot air belt drier. On leaving the drier, the chips were cooled.

The chips were then filled into pouches comprising aluminium foil laminated on each side to a thermoplastic film. The pouch was evacuated to approximately 750 mm of mercury vacuum and then backflushed with nitrogen to 500 mm of mercury vacuum and sealed using impulse or constant temperature sealing jaws. The sealed packages were then placed in an autoclave and heated for 40 minutes at an autoclave temperature of 121°C under a pressure of $1\frac{1}{2}$ to 3 bars to give a commercially sterile product. The pouches were cooled in the autoclave while maintaining an over pressure of 1 to 2 bars to prevent expansion of the pouches.

**0 072 250**

EXAMPLES 2 to 6

| Example No. | Potato variety | Potato moisture content w/w | Post drying moisture content w/w | Treatment solution strength w/w |
|---|---|---|---|---|
| 2 | Cyprus Spunta | 83% | 77.3% | 4% Sodium Chloride<br>1% Sucrose<br>2% Glucose D |
| 3 | English Maris Piper | 80% | 75% | 4% Sodium Chloride<br>1% Sucrose<br>1% Lactose |
| 4 | Dutch Bintje | 78% | 73.8% | 3% Sodium Chloride<br>1.5% Mono Sodium Glutamate<br>1% Sucrose<br>$\frac{1}{2}$% Fructose |
| 5 | English King Edwards | 77% | 73.3% | 2% Potassium Chloride<br>2% Sodium Chloride<br>1% Glucose<br>1% Lactose |
| 6 | English Records | 76% | 72.7% | 3% Sodium Chloride<br>0.01% Disodium 5 Inosinate<br>0.01% Disodium 5 Guanylate<br>2% Glucose |

The samples were treated either by spraying the chips or dipping the chips with a solution of the above salts and sugars for 30 seconds to 60 seconds.

Apart from the conditions specified above, the general process conditions and apparatus were as described in Example 1.

After sterilization the products were deep fat fried in fat or oil at 175°C to 185°C and gave a golden brown highly acceptable chip in 2 to 3 minutes.

**Claims**

1. A dry, cooked, heat sterilized, packaged potato product for frying comprising potato pieces which have been surface dried to reduce their moisture content by from 2 to 10% on a w/w basis so that the potato pieces have a moisture content of from 72 to 80% by weight, the potato pieces having been surface treated prior to packaging with a combination of a flavouring or flavour-enhancing salt and at least one reducing sugar or a di- or poly-saccharide which breaks down on heating to form a reducing sugar.

2. A potato product according to claim 1, wherein the potato pieces have a moisture content from 72.5 to 77% by weight.

3. A potato product according to claim 1 or claim 2, wherein the potato pieces have been surface treated with from 0.1 to 0.4% by weight of the flavouring or flavour-enhancing salt and from 0.1 to 0.5% by weight of the at least one reducing sugar or di- or poly-saccharide.

4. A potato product according to any one of claims 1 to 3, wherein the flavouring or flavour-enhancing salt is sodium chloride, potassium chloride, or mono- sodium glutamate.

5. A potato product according to any one of claims 1 to 4, wherein the reducing sugar or di- or poly-saccharide is sucrose, D or L glucose, fructose, lactose or a mixture of any two or more thereof.

6. A method of making a dry, cooked, heat sterilized, packaged potato product, which comprises surface treating potato pieces with a flavouring or flavour enhancing salt and at least one reducing sugar or a di- or poly-saccharide which breaks down on heating to form a reducing sugar and surface drying the potato pieces by reducing their moisture content by from 2 to 10% on a w/w basis to produce potato pieces having a moisture content of from 72 to 80% by weight, and thereafter placing the treated, partially dried potato pieces in a package in which they are sealed, sterilized and cooked.

7. A method according to claim 6 wherein the potato pieces are dried to a moisture content of 72.5 to 77%.

8. A method according to claim 6 or claim 7 wherein the treatment with the flavouring or flavour-enhancing salt and the at least one reducing sugar or di- or poly-saccharide is carried out by dipping the potato pieces in a solution containing both these components.

9. A method according to claim 6 or claim 7 wherein the treatment with the flavouring or flavour-enhancing salt and at least one reducing

4

sugar or di- or poly-saccharide is carried out by dipping the potato pieces sequentially in solutions containing each component separately.

10. A method according to claim 8 or claim 9, wherein the treatment solution(s) contains 1 to 8% by weight of the flavouring or flavour enhancing salt and 0.5 to 4% by weight of the reducing sugar or di- or poly-saccharide.

11. A method according to any one of claims 8 to 10 wherein the potato pieces are dipped in the solution(s) for a period of 10 to 120 seconds.

12. A method according to claim 6 or claim 7, wherein the surface treatment is carried out by spraying the potato pieces with a solution of the reducing sugar or di- or poly-saccharide and/or the flavouring or flavour enhancing salt.

13. A method according to any one of claims 6 to 12, wherein the surface treatment is such as to apply to the surface of the potato pieces the flavouring or flavour enhancing salt in an amount from 0.1 to 0.4% and the reducing sugar or di- or poly-saccharide in an amount from 0.1 to 0.5% by weight calculated on the weight of the pieces.

14. A method according to any one of claims 6 to 13, wherein the potato pieces are blanched before they are subjected to the drying treatment.

15. A method according to claim 14, wherein the potato pieces are blanched in a hot aqueous solution containing acid sodium pyrophosphate and sodium metabisulphite.

**Patentansprüche**

1. Trockenes, gegartes, hitzesterilisiertes, abgepacktes Kartoffelprodukt zum Fritieren, bestehend aus Kartoffelstücken, die zur Herabsetzung ihres Feuchtigkeitsgehalts um 2 bis 10 % bezogen auf Gewicht/Gewicht oberflächlich getrocknet wurden, sodaß die Kartoffelstücke einen Feuchtigkeitsgehalt von 72 bis 80 Gew.% haben, wobei die Kartoffelstücke vor dem Abpacken mit einer Kombination aus einem wohlschmeckenden oder geschmacksfördernden Salz und mindestens einem reduzierenden Zucker oder einem beim Erhitzen unter Bildung eines reduzierenden Zuckers zerfallenden Di- oder Polysaccharid oberflächenbehandelt wurden.

2. Kartoffelprodukt nach Anspruch 1, in welchem die Kartoffelstücke einen Feuchtigkeitsgehalt von 72,5 bis 77 Gew.% aufweisen.

3. Kartoffelprodukt nach Anspruch 1 oder 2, in welchem die Kartoffelstücke mit 0,1 bis 0,4 Gew.% des wohlschmeckenden oder geschmacksfördernden Salzes und 0,1 bis 0,5 Gew.% von zumindest einem reduzierenden Zucker oder einem Di- oder Polysaccharid oberflächenbehandelt wurden.

4. Kartoffelprodukt nach irgend einem der Ansprüche 1 bis 3, in welchem das wohlschmeckende oder geschmacksfördernde Salz Nateriumchlorid, Kaliumchlorid oder Monoatriumglutamat ist.

5. Kartoffelprodukt nach irgend einem der Ansprüche 1 bis 4, in welchem der reduzierende Zucker oder das Di- oder Polysaccharid Saccharose, D- oder L-Glucose, Fructose, Lactose oder eine Mischung von zwei oder mehreren derselben ist.

6. Verfahren zur Herstellung eines trockenen, gegarten, hitzesterilisierten, abgepackten Kartoffelprodukts, bei welchem Kartoffelstücke mit einem wohlschmechenden oder geschmacksfördernden Salz und zumindest einem reduzierenden Zucker oder einem Di- oder Polysaccharid, das beim Erhitzen unter Bildung eines reduzierenden Zuckers zerfällt, oberflächenbehandelt und oberflächlich getrocknet werden, indem der Feuchtigkeitsgehalt der Kartoffelstücke um 2 bis 10 % bezogen auf Gewicht/Gewicht reduziert wird, um Kartoffelstücke mit einem Feuchtigkeitsgehalt von 72 bis 80 Gew.% zu gewinnen, worauf die behandelten, teilweise getrockneten Kartoffelstücke in eine Packung eingebracht werden, in welcher sie versiegelt, sterilisiert und gegart werden.

7. Verfahren nach Anspruch 6, bei welchem die Kartoffelstücke auf einem Feuchtigkeitsgehalt von 72,5 bis 77% getrocknet werden.

8. Verfahren nach Anspruch 6 oder 7, bei welchem die Behandlung mit dem wohlschmeckenden oder geschmacksfördernden Salz und dem mindestens einen reduzierenden Zucker oder dem Di- oder Polysaccharid durch Eintauchen der Kartoffelstücke in eine diese beiden Komponenten enthaltende Lösung erfolgt.

9. Verfahren nach Anspruch 6 oder 7, bei welchem die Behandlung mit dem wohlschmeckenden oder geschmacksfördernden Salz und dem mindestens einen reduzierenden Zucker oder dem Di- oder Polysaccharid durch aufeinanderfolgendes Eintauchen der Kartoffelstücke in diese Komponenten getrennt enthaltende Lösungen erfolgt.

10. Verfahren nach Anspruch 8 oder 9, bei welchem die Behandlungslösung(en) 1 bis 8 Gew.% des wohlschmeckenden oder geschmacksfördernden Salzes und 0,5 bis 4 Gew.% des reduzierenden Zucker oder des Di- oder Polysaccharids enthält (enthalten).

11. Verfahren nach irgend einem der Ansprüche 8 bis 10, bei welchem die Kartoffelstücke während eines Zeitraums von 10 bis 120 sec in die Lösung(en) getaucht werden.

12. Verfahren nach Anspruch 6 oder 7, bei welchem die Oberflächenbehandlung durch Besprühen der Kartoffelstücke mit einer Lösung des reduzierenden Zuckers oder des Di- oder Polysaccharids und/oder des wohlschmeckenden oder geschmacksfördernden Salzes erfolgt.

13. Verfahren nach irgend einem der Ansprüche 6 bis 12, bei welchem die Oberflächenbehandlung so erfolgt, daß auf die Oberfläche der Kartoffelstücke des wohlschmeckende oder geschmacksfördernde Salz in einer Menge von 0,1 bis 0,4% und der reduzierende Zucker oder das Di- oder Polysaccharid in einer Menge von 0,1 bis 0,5 Gew.% bezogen auf das Gewicht der Stücke aufgebracht wird.

14. Verfahren nach irgend einem der Ansprüche 6 bis 13, bei welchem die Kartoffelstücke blanchiert werden, bevor sie der Trocknungsbehandlung unterzogen werden.

15. Verfahren nach Anspruch 14, bei welchem die Kartoffelstücke in einer heißen wässerigen Lösung von saurem Natriumpyrophosphat und Natriummetabisulfit blanchiert werden.

## Revendications

1. Produit de pomme de terre pour friture, emballé, stérilisé par la chaleur, cuit, sec, comprenant des morceaux de pommes de terre qui ont été séchés en surface pour en diminuer la teneur en humidité de 2 à 10 % sur une base de poids/poids de sorte que les morceaux de pommes de terre présentent une teneur en humidité de 72 à 80 % en poids, les morceaux de pommes de terre ayant été traités en surface avant leur emballage par une combinaison d'un sel d'aromatisation ou amplifiant la flaveur et d'au moins un sucre réducteur ou un di- ou poly-saccharide qui se décompose par chauffage pour former un sucre réducteur.

2. Produit de pomme de terre selon la revendication 1, dans lequel les morceaux de pommes de terre ont une teneur en humidité de 72,5 à 77 % en poids.

3. Produit de pomme de terre selon la revendication 1 ou la revendication 2, dans lequel les morceaux de pommes de terre ont été traités en surface par 0,1 à 0,4 % en poids du sel d'aromatisation ou amplifiant la flaveur et par 0,1 à 0,5 % en poids d'au moins un sucre réducteur ou de di- ou poly-saccharide.

4. Produit de pomme de terre selon l'une quelconque des revendications 1 à 3, dans lequel le sel d'aromatisation ou amplifiant la flaveur est du chlorure de sodium, du chlorure de potassium, ou du glutamate monosodique.

5. Produit de pomme de terre selon l'une quelconque des revendications 1 à 4, dans lequel le sucre réducteur ou di- ou poly-saccharide est du saccharose, du D- ou L-glucose, du fructose, du lactose ou un mélange de deux ou plusieurs d'entre eux.

6. Procédé pour préparer un produit de pomme de terre emballé, sec, stérilisé par la chaleur et cuit, qui comprend le traitement en surface des morceaux de pommes de terre par un sel d'aromatisation ou amplifiant la flaveur et par au moins un sucre réducteur ou un di- ou poly-saccharide qui se décompose par chauffage pour former un sucre réducteur, et le séchage en surface des morceaux de pommes de terre par réduction de leur teneur en humidité de 2 à 10 %, sur une base de poids/poids, pour produire des morceaux de pommes de terre ayant une teneur en humidité de 72 à 80 % en poids, puis placement des morceaux de pommes de terre traités, partiellement séchés, dans un emballage dans lequel ils sont enfermés par scellement, stérilisés et cuits.

7. Procédé selon la revendication 6, dans lequel les morceaux de pommes de terre sont séchés jusqu'à une teneur en humidité de 72,5 à 77 %.

8. Procédé selon la revendication 6 ou la revendication 7, dans lequel on effectue le traitement par le sel d'aromatisation ou amplifiant la flaveur et par au moins un sucre réducteur ou di- ou poly-saccharide en plongeant les morceaux de pommes de terre dans une solution contenant ces deux constituants.

9. Procédé selon la revendication 6 ou la revendication 7, dans lequel on effectue le traitement par le sel d'aromatisation ou amplifiant la flaveur et par au moins un sucre réducteur ou di- ou poly-saccharide en plongeant les morceaux de pommes de terre successivement dans des solutions contenant chaque constituant séparément.

10. Procédé selon la revendication 8 ou la revendication 9, dans lequel la ou les solution(s) de traitement contient ou contiennent 1 à 8 % en poids du sel d'aromatisation ou amplifiant la flaveur et 0,5 à 4 % en poids du sucre réducteur ou du di- ou poly-saccharide.

11. Procédé selon l'une quelconque des revendications 8 à 10, dans lequel on plonge les morceaux de pommes de terre dans la ou les solutions pendant une période de 10 à 120 secondes.

12. Procédé selon la revendication 6 ou la revendication 7, dans lequel on effectue le traitement de la surface en projetant par pulvérisation sur les morceaux de pommes de terre une solution du sucre réducteur ou du di- ou poly-saccharide et/ou du sel d'aromatisation ou amplifiant la flaveur.

13. Procédé selon l'une quelconque des revendications 6 à 12, dans lequel le traitement de surface est tel que l'on applique à la surface des morceaux de pommes de terre une quantité de 0,1 à 0,4 % du sel d'aromatisation ou amplifiant la flaveur et une quantité de 0,1 à 0,5 % en poids, par rapport au poids des morceau, du curre réducteur ou du di- ou poly-saccharide.

14. Procédé selon l'une quelconque des revendications 6 à 13, dans lequel on blanchit les morceaux de pommes de terre avant de les soumettre au traitement de séchage.

15. Procédé selon la revendication 14, dans lequel on blanchit les morceaux de pommes de terre dans une solution aqueuse chaude contenant du pyrophosphate acide de sodium et du métabisulfite de sodium.